# FASCICULE DE BREVET EUROPEEN

(11) **EP 3 930 123 B1**
(45) Date de publication et mention de la délivrance du brevet: **07.06.2023**
(21) Numéro de dépôt: 21180762.3
(22) Date de dépôt: 22.06.2021
(51) Int. Cl.: H02B 1/052, F21V 23/00, F21V 21/10

(54) **BOÎTIER DE PROTECTION ET DE RACCORDEMENT ET MÉTHODE D'ASSEMBLAGE ET DE DÉSASSEMBLAGE D'UN TEL BOÎTIER**
SCHUTZ- UND ANSCHLUSSGEHÄUSE UND VERFAHREN ZUR MONTAGE UND DEMONTAGE EINES SOLCHEN GEHÄUSES
HOUSING FOR PROTECTION AND CONNECTION AND METHOD FOR ASSEMBLING AND DISMANTLING SUCH A HOUSING

(30) Priorité: 23.06.2020 FR 2006545
(43) Date de publication de la demande: 29.12.2021
(73) Titulaire: Lacroix City Les Chères, 69380 Les Chères (FR)
(72) Inventeur: THION, Guillaume, 01390 TRAMOYES (FR); GARILHE, Xavier, 69002 LYON (FR)
(74) Mandataire: Lavoix

(56) Documents cités:
- EP-A1- 2 469 672
- EP-B1- 2 469 672
- DE-U1- 20 218 558
- FR-A1- 2 269 810
- FR-A1- 2 425 607
- GB-A- 2 077 040

## Description

La présente invention concerne un boîtier de protection et de raccordement et une méthode d'assemblage et de désassemblage d'un tel boîtier.

Dans le domaine de l'éclairage public, il est connu d'effectuer le raccordement d'un candélabre à un réseau d'énergie électrique à l'intérieur d'un boîtier de protection placé à la base de ce candélabre. En complément des éléments de raccordement électrique, il est connu d'équiper un tel boîtier d'éléments de protection et d'éventuels éléments de gestion ou de services tiers. L'ensemble de ces éléments sont fixés dans le boîtier par l'intermédiaire de différents supports, dont une partie prend la forme de rails DIN 35 × 7,5mm. Certains systèmes de fixation sont modulaires, dans la mesure où il est possible d'ajouter un ou plusieurs types de support, proposant chacun des caractéristiques différentes d'assemblage, et pouvant être installés dans plusieurs positions en fonction des configurations d'éléments à installer dans le boîtier.

Ces solutions nécessitent cependant le recours à plusieurs types de support dont le système de montage est différent et présentent une modularité limitée, car le boîtier de protection est pourvu des zones réservées à certains types de support exclusivement, en fonction de leur système de montage. De plus, certains de ces supports nécessitent le recours à des outils pour être installés, ce qui complexifie leur installation.

Le document FR2269810 décrit une platine et un support selon l'état de la technique.

C'est à ces problèmes qu'entend plus particulièrement remédier l'invention, en proposant un nouveau type de boîtier de protection et de raccordement pour candélabre dans lequel la fixation des supports s'effectue à la main et qui présente une modularité améliorée.

À cet effet, l'invention concerne un boîtier de protection et de raccordement intégrant une platine équipée de rails et au moins un support, rapporté sur cette platine et démontable. Selon l'invention, la platine comporte deux rails d'accrochage disposés de façon longitudinale et un rail central d'indexation comportant des encoches. En outre, le support comporte au moins deux crochets d'accrochage et au moins un plot d'indexation, ces crochets d'accrochage et ce plot d'indexation permettant le montage à la main du support sur la platine par encliquetage des crochets d'accrochage sur les rails d'accrochage et engagement du plot d'indexation dans une des encoches du rail central d'indexation. Par ailleurs, les rails d'accrochage s'étendent sur au moins 30% de la longueur utile de la platine. De plus, le rail central d'indexation s'étend sur au moins 25% de la longueur utile de la platine. Enfin, les rails d'accrochage et le rail central d'indexation permettent de fixer le support sur la platine.

Grâce à l'invention, les supports peuvent être installés sans outil, selon la longueur utile du boîtier, qui est en pratique disposée selon une direction verticale en configuration montée du boîtier dans un candélabre, ce qui améliore la modularité du boîtier de l'invention par rapport aux matériels connus.

Selon des aspects avantageux mais non obligatoires de l'invention, un tel support peut incorporer une ou plusieurs des caractéristiques suivantes prises isolément ou selon toute combinaison techniquement admissible :
- Les crochets d'accrochage sont au nombre de deux, le support comprend un corps principal qui porte le plot et au moins une patte élastiquement déformable reliant le corps principal à un crochet d'accrochage, au moins un crochet d'accrochage, de préférence chaque crochet d'accrochage, comporte une cavité, et chaque cavité est configurée pour accueillir un outil permettant de désengager le crochet d'accrochage qui comporte cette cavité du rail latéral associé de la platine, par déformation élastique de la patte élastiquement déformable reliant ce crochet d'accrochage au corps principal.
- Les crochets d'accrochage appartiennent à au moins une paire de deux crochets d'accrochage, de préférence deux paires de deux crochets d'accrochage, le support comprend un corps principal qui porte le plot et au moins une paire de deux pattes élastiquement déformables reliant chacune le corps principal à un des deux crochet d'accrochage d'une paire de deux crochets, et le support comprend des organes de manoeuvre permettant de désengager à la main une paire de crochets d'accrochage des rails d'accrochage.
- Au moins un crochet d'accrochage de chaque paire de crochets, de préférence chaque crochet, comporte un organe de manoeuvre, chaque organe de manoeuvre est configuré pour être manipulé à la main, permettant de désengager le crochet d'accrochage qui comporte cet organe de manoeuvre du rail d'accrochage associé de la platine, par déformation élastique de la patte élastiquement déformable reliant ce crochet d'accrochage au corps principal.
- Les deux crochets d'accrochage de chaque paire de crochets d'accrochage sont reliés entre deux par un bras élastiquement déformable, ce bras présentant de préférence une zone de déformation privilégiée.
- Le corps principal du support comprend un perçage central traversant permettant de visualiser un marquage présent sur le rail central de la platine en configuration montée ou en cours de montage du premier ou du deuxième support sur la platine et deux perçages latéraux traversant disposés en regard de deux plots d'indexation et permettant de

visualiser ces plots et des encoches du rail central de la platine en configuration montée ou en cours de montage du premier ou du deuxième support sur la platine.
- La platine est en matériau polymère, de préférence en polycarbonate, et le ou chaque support est en matériau polymère, de préférence en polyamide.
- La platine comporte un ou plusieurs trous de fixation et une ou plusieurs encoches spécifiques configurés pour permettre la fixation d'un support vissé.
- Les encoches du rail central d'indexation de la platine sont réparties sur deux rangées parallèles à un axe longitudinal de la platine et le support comprend au moins une paire de plots d'indexation, de préférence trois paires de plots d'indexation, les plots d'une paire de plots étant configurés pour s'engager dans deux encoches appartenant chacune à une rangée d'encoches.

Selon un autre aspect, l'invention concerne aussi une méthode d'assemblage et de désassemblage d'un boîtier de protection et de raccordement tel que mentionné ci-dessus, dans laquelle
- le support est monté à la main sur la platine par encliquetage des crochets d'accrochage dans des rails d'accrochage et par engagement des plots d'indexation dans des encoches du rail central ;
- un support, d'un premier type, est démonté de la platine en insérant un outil dans une cavité d'un crochet d'accrochage puis en exerçant à l'aide de l'outil un effort sur le crochet d'accrochage permettant de désengager ce crochet d'un rail d'accrochage par déformation d'une patte élastiquement déformable ; et/ou
- un support, d'un deuxième type, est démonté de la platine à la main en exerçant deux efforts sur une paire d'organes de manoeuvre permettant de désengager une paire de crochets d'accrochage de deux rails d'accrochage par déformation d'une paire de pattes élastiquement déformables et éventuellement d'un bras élastiquement déformable.

Cette méthode induit les mêmes avantages que ceux mentionnés ci-dessus au sujet du boîtier de l'invention.

L'invention sera mieux comprise, et d'autres avantages de celle-ci apparaîtront plus clairement à la lumière de la description qui va suivre, d'un mode de réalisation d'un boîtier de protection et de raccordement et d'une méthode d'assemblage et de désassemblage de ce boîtier, conformes à l'invention, donnée uniquement à titre d'exemple et faite en référence aux dessins annexés, dans lesquels :
[Fig. 1] La figure 1 est une vue en perspective éclatée d'un boîtier de protection et de raccordement conforme à l'invention ;
[Fig. 2] La figure 2 est une vue de face d'une embase du boîtier de la figure 1, sur laquelle un seul appareillage électrique est monté ;
[Fig. 3] La figure 3 est une vue du détail III de la figure 2 ;
[Fig. 4] La figure 4 est une vue du détail IV de la figure 2 ;
[Fig. 5] La figure 5 est une coupe selon la ligne V-V de la figure 2, sur laquelle le support visible à la figure 4 n'est pas représenté ;
[Fig. 6] La figure 6 est une vue en perspective d'un support d'un premier type, selon un angle de vue opposé à celui de la figure 1 ; et
[Fig. 7] La figure 7 est une vue en perspective d'un support d'un deuxième type, selon un angle de vue opposé à celui de la figure 1.

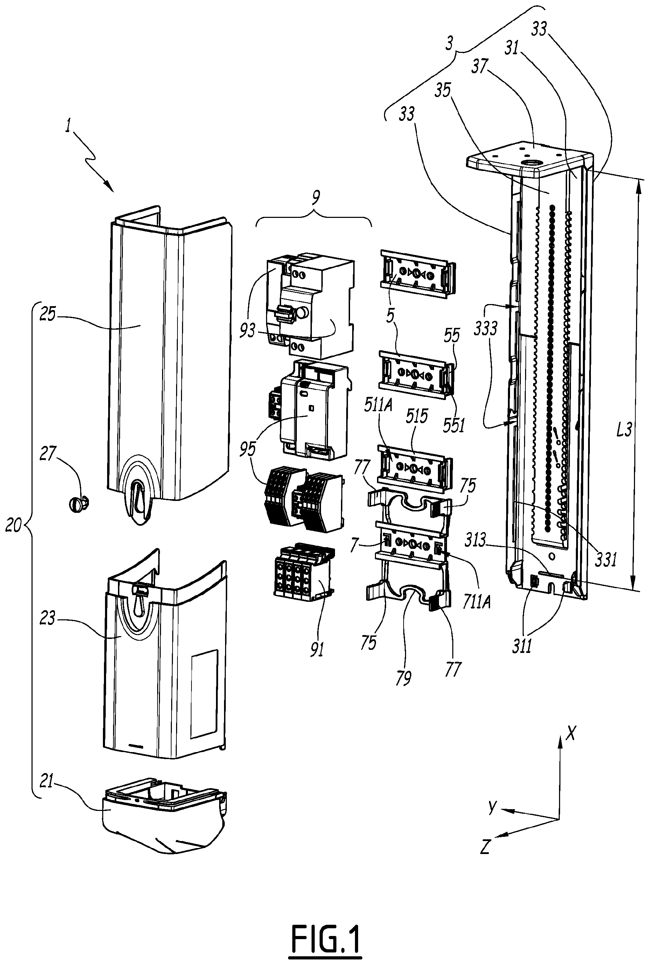

Un boîtier de raccordement et de protection 1 est représenté à la figure 1 en vue éclatée. Il est destiné à être monté en partie basse d'un candélabre d'éclairage public, pour permettre le raccordement de ce candélabre à un réseau d'alimentation électrique et pour contrôler son fonctionnement. Ce boîtier comprend une platine 3 qui forme le fond du boîtier 1. Cette platine comprend un fond 31, deux bords latéraux 33 et un rail central d'indexation 35. Par central, on entend que le rail 35 s'étend à mi-distance entre les bord latéraux 33. La platine comprend également une plaque 37 qui définit un bord supérieur du boîtier 1 en configuration montée de celui-ci au pied d'un candélabre.

La platine est monobloc et réalisée, par moulage, en matériau polymère, dans l'exemple en polycarbonate.

Le boîtier est fermé par un couvercle 20 composé de trois éléments, également en matériau polymère, à savoir :
- un couvercle inférieur 21 clippé sur deux pattes 311 ménagées en saillie sur le fond 31 et sur les bords latéraux 33 de la platine 3, ce couvercle 21 est de préférence bipartite,
- un couvercle intermédiaire 23 clippé au couvercle inférieur et aux bords latéraux de la platine et
- un couvercle supérieur 25 clippé au couvercle intermédiaire, aux bords latéraux de la platine et au bord supérieur du boîtier.
Le couvercle supérieur est maintenu en place sur le couvercle intermédiaire par un crochet de fermeture 27.

L'intérieur du boîtier intègre un certain nombre d'appareillages électriques 9, non-détaillés dans cette description, pouvant être par exemple des éléments de raccordement, tels que des borniers 91, des éléments de protection, tels que des disjoncteurs ou sectionneurs 93, ou encore des éléments appartenant à des services tiers 95, permettant de contrôler le fonctionnement d'une installation comprenant le point lumineux du candélabre. Ces appareillages électriques 9 sont raccordés à la platine 3 par l'intermédiaire de supports 5 et 7. Ces supports sont eux-mêmes fixés à la platine 3 sur ses bords latéraux 33 et sur le rail central d'indexation 35, comme expliqué ci-après.

La platine 3 et les supports 5 et 7 constituent ensemble une embase 8 qui permet le montage des appareillages électriques dans le boîtier 1. Dans l'exemple des figures, l'embase 8 comprend la platine 3, trois supports d'un premier type, ou premiers supports 5, et un support d'un deuxième type, ou deuxième support 7.

Le boîtier 1 est fixé au candélabre, par l'intermédiaire de la platine 3, par un système d'attache non représenté.

On définit un axe longitudinal X du boîtier 1 comme un axe parallèle à la plus grande dimension du boîtier 1. Les bords latéraux 33 sont parallèles à l'axe X. En configuration monté du boîtier dans un candélabre, cet axe X est vertical ou quasi-vertical et la longueur du boîtier est mesuré parallèlement à cet axe. On définit un axe transversal Y du boîtier 1 comme un axe orthogonal à l'axe X et reliant les bord latéraux 33. Le plan formé par les axes X et Y est parallèle au fond 31 de la platine On définit un axe de profondeur Z du boîtier comme le troisième axe d'un repère orthogonal comprenant les axes X et Y.

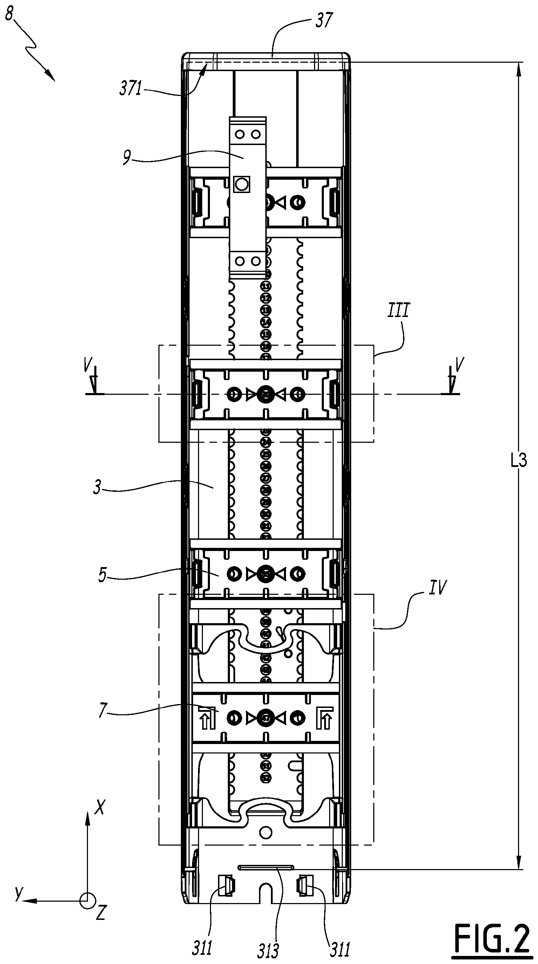

Une vue de face de l'embase 8, prise selon l'axe Z, est représentée en figure 2. Sur cette vue, un seul appareillage électrique 9 est représenté en place sur un support 5, mais d'autres appareillages 9 peuvent bien entendu être montés sur les différents supports 5 et 7.

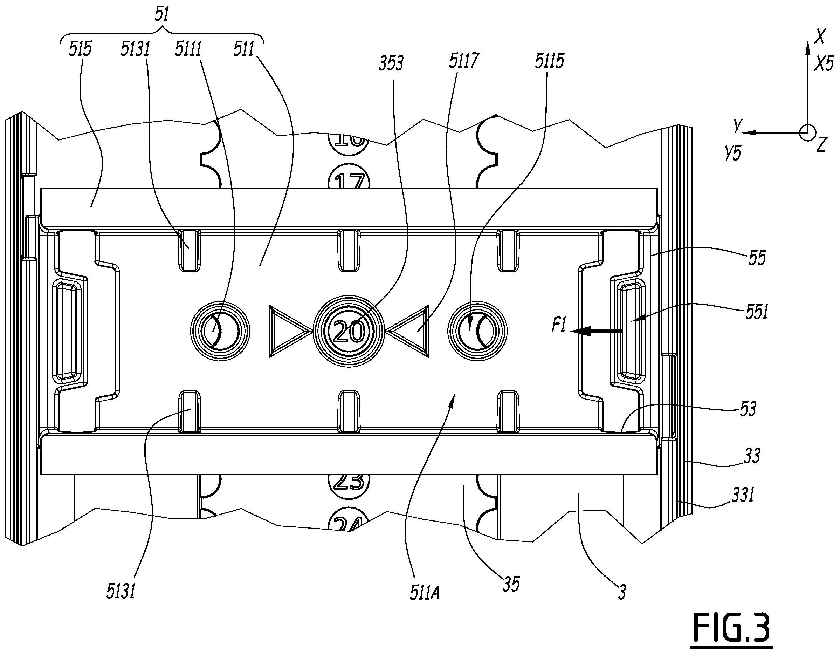

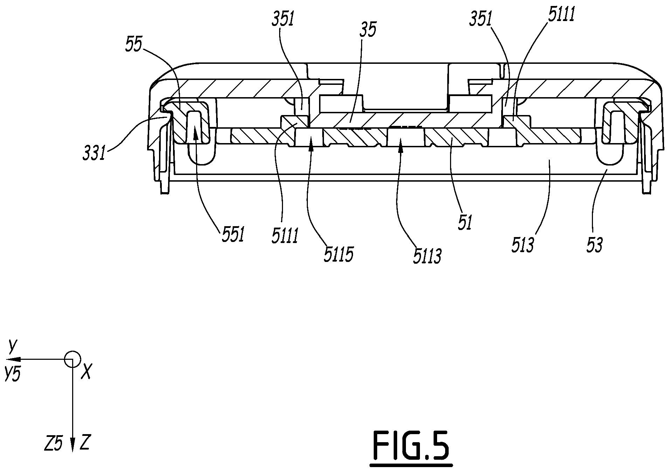

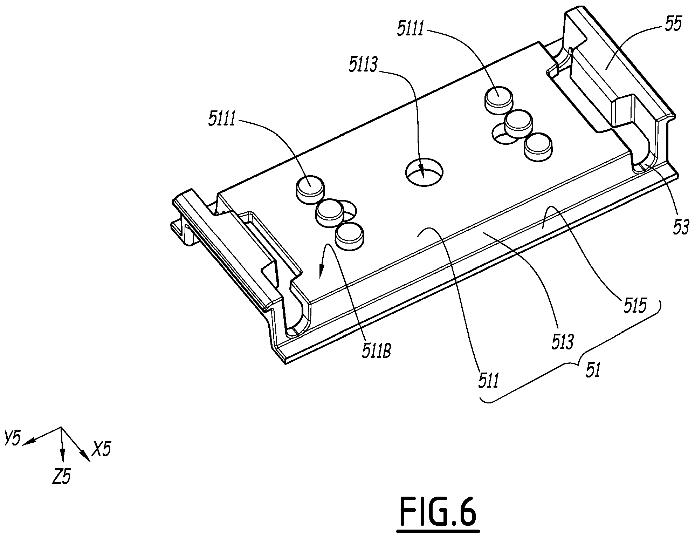

Les supports 5 sont identiques et monoblocs. Ils sont réalisés en matériau polymère, dans l'exemple en polyamide. Un support 5 est représenté fixé sur la platine 3 aux figures 2 et 3. Ce support est également représenté en coupe à la figure 5 et en perspective, selon deux angles différents, aux figures 1 et 6.

On définit un repère orthogonal X5-Y5-Z5 associé au support 5 et dont les axes X5, Y5 et Z5 sont respectivement superposés aux axes X, Y et Z lorsque le support 5 est montés sur la platine 3.

Le support 5 représenté aux figures 1, 2, 3, 5 et 6 comporte un corps principal 51, formé d'une plaque de base 511, de deux parois latérales 513 s'étendant le long de l'axe transversal Y5 et de deux rails ou bandes 515 de fixation d'appareillages électriques 9 parallèles au plan formé par les axes X5 et Y5.

On note 511A la face de la plaque de base 511 tournée vers le ou les appareillages électriques lorsque ceux-ci sont rapportés sur le support 5. Cette face est visible aux figures 1 à 3. On note 511B la face de la plaque de base opposée à la face 511A, cette face 511B étant tournée vers le fond 31 de la platine 3 lorsque le support est monté sur la platine. Cette face 511B est visible à la figure 6.

Des renforts structurels 5131, en forme de nervures s'étendant entre les parois 513 et la face 511A de plaque de base 511, permettent de rigidifier le corps principal 51. Dans cet exemple, les renforts structurels 5131 sont au nombre de 6. Ce nombre peut varier, en fonction de la conception du support 5.

Six plots d'indexation 5111 s'étendent en saillie depuis la face 511B de la plaque de base 511.

Le corps principal 51 comprend un perçage central 5113 traversant la plaque de base 511 selon l'axe Z5 et deux perçages latéraux 5115 traversant également la plaque de base 511 selon l'axe Z5, situés partiellement en regard de deux des six plots 5111. La plaque de base 511 présente, sur sa face 511A, deux aides visuelles 5117 permettant d'identifier plus facilement le perçage central en phase d'installation du support 5.

Les plots 5111 sont répartis en deux rangées de trois plots qui définissent trois paires de plots, les plots d'une même paire de plots étant disposés de part et d'autre du perçage central 5113 le long de l'axe Y5.

Le support 5 présente également deux crochets d'accrochage 55, reliés chacun au corps principal 51 par deux pattes élastiquement déformables 53 et comprenant chacun une cavité 551 dont la concavité est orientée, selon l'axe Z5, du même côté que la face 511A de la plaque de base 511. En d'autres termes, la cavité 551 de chaque crochet 55 est accessible par le côté du support 5 où la face 511A est apparente, c'est-à-dire par le côté opposé au fond 31 de la platine 3 lorsque le support 5 est monté sur cette platine.

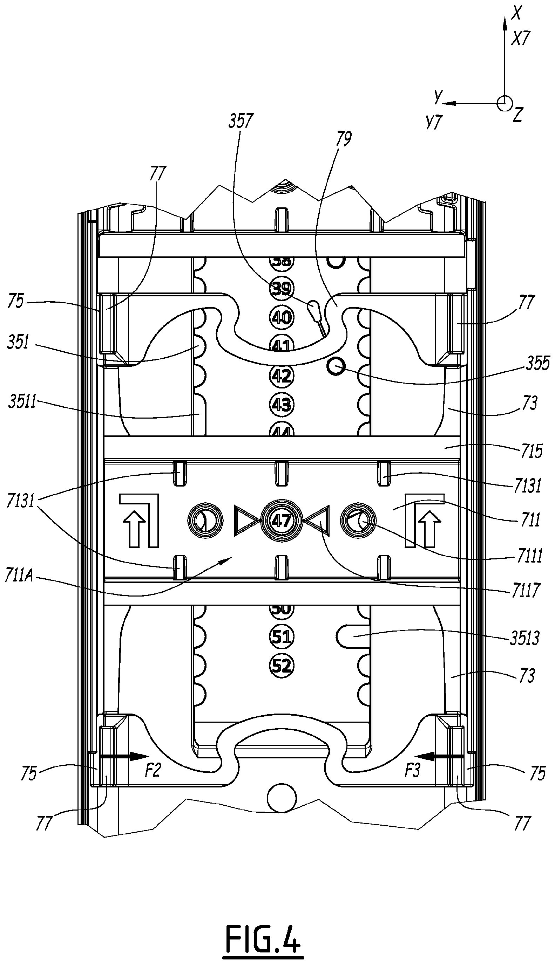

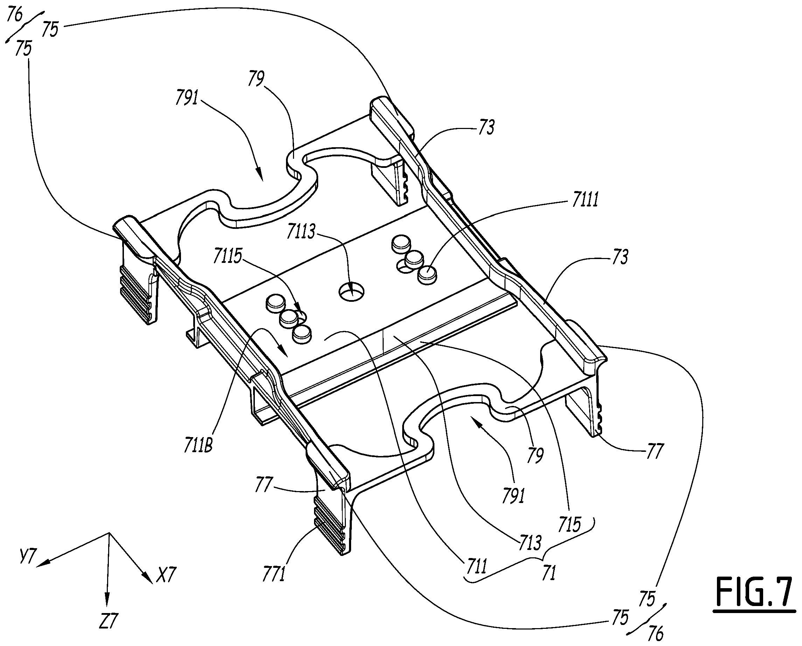

Le support 7 est monobloc. Il est réalisé en matériau polymère, dans l'exemple en polyamide. Le support 7 est représenté fixé sur la platine 3 aux figures 2 et 4. Ce support est également représenté en perspective, selon deux angles différents, aux figures 1 et 7.

On définit un repère orthogonal X7-Y7-Z7 associé au support 7 et dont les axes X7, Y7 et Z7 sont respectivement superposés aux axes X, Y et Z lorsque le support 7 est monté sur la platine 3.

Le support 7 comporte un corps principal 71, formé d'une plaque de base 711, de deux parois latérales 713 s'étendant le long de l'axe transversal Y7 et de deux rails ou bandes 715 de fixation d'appareillages électriques 9 parallèles au plan formé par les axes X7 et Y7.

On note 711A la face de la plaque de base 711 tournée vers le ou les appareillages électriques 9 lorsque ceux-ci sont rapportés sur le support 6. Cette face est visible aux figures 1, 2 et 4. On note 711B la face de la plaque de base opposée à la face 711A, cette face 711B étant tournée vers le fond 31 de la platine 3 lorsque le support 7 est monté sur la platine. Cette face 711B est visible à la figure 7.

Des renforts structurels 7131, en forme de nervures s'étendant entre les parois 713 et la face 711A de la plaque de base 711, permettent de rigidifier le corps principal 71. Dans cet exemple, les renforts structurels 7131 sont au nombre de 6. Ce nombre peut varier, en fonction de la conception du support 7.

Six plots d'indexation 7111 s'étendent en saillie depuis la face 711B de la plaque de base 711.

Le corps principal 71 comprend un perçage central 7113 traversant la plaque de base 711 selon l'axe vertical Z7 et deux perçages latéraux 7115 traversant également la plaque de base 711 selon l'axe vertical Z7, situés partiellement en regard de deux des six plots 7111. La plaque de base 711 présente, sur sa face 711A, deux aides visuelles 7117 permettant d'identifier plus facilement le perçage central en phase d'installation du support 7.

Les plots 7111 sont répartis en deux rangées de trois plots qui définissent trois paires de plots, les plots d'une même paire de plots étant disposés de part et d'autre du perçage central 7113 le long de l'axe Y7.

Le support 7 présente également deux paires 76 de deux crochets d'accrochage 75. Une paire 76 de crochets 75 comporte deux crochets éloignés du corps principal 71 parallèlement à l'axe X7 et dans le même sens le long de cet axe pour chacun des deux crochets. Les deux paires 76 de crochets 75 s'étendent, par rapport au corps principal 711, selon deux sens différents le long de l'axe X7. En d'autres termes, les paires 76 de crochets sont disposées de part et d'autre du corps principal 711, le long de l'axe X7.

Chaque crochet 75 est relié au corps principal 71 par une patte élastiquement déformable 73. Les deux crochets d'une paire de crochets sont reliés entre eux par un bras élastiquement déformable 79. Ce bras élastiquement déformable présente, de préférence, une partie 791 avec une forme en oméga qui constitue une zone de déformation privilégiée du bras 79.

Chaque crochet 75 porte un organe de manoeuvre 77 s'étendant principalement parallèlement à l'axe Z7 et présentant des cannelures 771 destinées à faciliter sa manipulation.

Chaque bord latéral 33 de la platine 3 comporte un rail d'accrochage 331, visible sur les figures 1, 3, 4 et 5. Les deux rails d'accrochage 331 s'étendent chacun, de façon longitudinale par rapport à la platine 3, sur l'essentiel d'une longueur utile L3 de la platine qui s'étend selon l'axe X et qui correspond à la longueur du boîtier 1 pouvant accueillir des appareillages électriques 9 lorsque celui-ci est monté au pied d'un candélabre. En pratique, la longueur utile L3 est mesurée entre la face intérieure 371 de la plaque 37 et une nervure transversale 313, ménagée à proximité des pattes 311.

Dans l'exemple, les deux rails d'accrochage 331 de la platine 3 présentent des interruptions 333. Ces interruptions sont ménagées pour faciliter la fabrication de la platine 3, notamment pour le passage de tiroirs de moulage. Ces interruptions ne sont pas obligatoires et présentent chacune une longueur, mesurée parallèlement à l'axe X, très inférieure à la longueur L3, en pratique inférieure à L3 la longueur des crochets 55 et/ou 75 respectivement des supports 5 et/ou 7, au point que les rails 331 peuvent être considérés comme continus, ou quasi continus. De plus, les interruptions des rails n'empêchent pas le montage des supports 5 et 7.

Dans le principe, les rails d'accrochage 331 s'étendent sur une longueur d'au moins 30% de la longueur L3, de préférence au moins 50%. La valeur de 30% mentionnée ci-avant permet de pouvoir loger au moins un support 5 et au moins un support 7 sur la platine 3. En pratique, on peut prévoir que les rails d'accrochage s'étendent sur environ 80% de la longueur L3.

Le fond 31 de la platine porte le rail central d'indexation 35 qui s'étend selon l'axe longitudinal X. Ce rail central s'étend sur une longueur d'au moins 25% de la longueur utile L3 de la platine 3, de préférence au moins 45%. La valeur de 25% mentionnée ci-avant permet de pouvoir loger au moins un support 5 et au moins un support 7 sur la platine 3. En pratique, on peut prévoir que le rail central d'indexation s'étende sur environ 75% de la longueur L3.

Avec les pourcentages de 80% mentionnés ci-dessus, il est possible de fixer les supports 5 et/ou 7 sur sensiblement toute la longueur utile L3 de la platine 3.

Le rail central comprend des encoches 351, dans l'exemple de formes semi-circulaires, qui sont réparties sur deux rangées parallèles à l'axe longitudinal X. Selon un aspect avantageux mais non obligatoire, le rail central d'indexation 35 comprend également un marquage d'indexation 353 composé d'une numérotation, dans l'exemple de 1 à 52, comprenant un nombre de valeurs égal au nombre de positions dans lesquelles un support 5 ou 7 peut être fixé à la platine 3. Ce marquage est placé au centre du rail central d'indexation le long de l'axe longitudinal X. Lorsqu'un support 5 ou 7 est installé sur la platine 3, la position du support est ainsi identifiable, le marquage d'indexation étant visible à travers le perçage central 5113 ou 7113 du support.

Le montage d'un support 5 sur la platine 3 s'effectue à la main par encliquetage des crochets d'accrochage 55 dans les rails d'accrochage 331 et par engagement des plots 5111 dans les encoches semi-circulaires 351 du rail central d'indexation 35. Cette position montée est représentée sur la figure 5. Ainsi, le montage d'un support 5 est effectué sur l'une des 52 positions définies par le marquage d'indexation 353.

Ainsi monté, le support 5 est rendu solidaire de la platine 3. Son démontage s'effectue en insérant un outil, par exemple la pointe d'un tournevis plat, dans une des deux cavités 551, puis en manipulant l'outil pour exercer un effort F1 sur le crochet 55 portant la cavité 551 utilisée, cet effort étant dirigé principalement vers le corps principal 51. La composante de l'effort F1 dirigée selon l'axe Y et vers le corps principal 51 permet de déplacer le crochet 55 selon cet axe et en direction du corps principal 51, par déformation élastique des deux pattes élastiquement déformables 53, permettant ainsi de désengager le crochet du rail d'accrochage 331 de la platine 3. Si nécessaire, cette opération est ensuite répétée avec le second crochet 55.

Une fois les deux crochets 55 désengagés des rails 331, le support est déplacé selon l'axe Z, permettant de désengager les plots 5111 des encoches 351 et ainsi de terminer le démontage du support 5 vis-à-vis de la platine 3. Les caractéristiques géométrique et mécanique du crochet 55, de la cavité 551 et des pattes élastiquement déformables 53 empêchent tout démontage sans outil, notamment tout démontage à la main.

Le montage d'un support 7 sur la platine 3 s'effectue à la main par encliquetage des deux paires de deux crochets d'accrochage 75 dans les rails d'accrochage 331 et par engagement des plots 7111 dans les encoches 351 du rail central d'indexation 35. Ainsi, ce montage est effectué sur l'une des 52 positions définies par le marquage d'indexation 353, de façon comparable à un support 5, sauf que deux crochets 75 interagissent avec chaque rail d'accrochage.

En position montée, un support 7 est retenu solidaire de la platine 3 mais est démontable à la main. Ce démontage est effectué en exerçant deux efforts simultanés F2 et F3 sur deux organes de manoeuvre 77 appartenant à une même paire 76 de crochets 75. Ces efforts F2 et F3 sont chacun exercés sur un organe de manoeuvre et dirigés vers l'organe de manoeuvre 77 de l'autre crochet de la même paire de crochets. Les composantes des efforts F2 et F3 dirigées selon l'axe Y et vers le rail central d'indexation 35 permettent de déplacer les deux crochets 75 selon cet axe et en direction du rail central d'indexation 35, par déformation élastique des deux pattes élastiquement déformables 73 reliant chacune un crochet au corps principal, et par déformation élastique du bras 79 reliant les deux crochets entre eux, plus particulièrement au niveau de la zone de déformation privilégiée 791. Ce déplacement permet de désengager les deux crochets d'une paire de crochets des rails d'accrochage 331 des deux bords latéraux 33 de la platine. La géométrie du bras 79 au niveau de la zone de déformation privilégiée 791 permet de quantifier l'intensité des efforts à exercer pour désengager les crochets 75 des rails 331. Cette opération est ensuite répétée avec la seconde paire de crochets. Une fois les quatre crochets 55 désengagés des rails 331, le support est déplacé selon l'axe Z, permettant de désengager les plots 7111 des encoches 351 et ainsi de terminer le démontage du support 7.

Le bras 79 a principalement un rôle de rigidification du support, aussi bien en statique, pour une stabilité du support dans le temps, qu'en dynamique, lors de la manipulation des organes de manoeuvre 77. Un mode de réalisation sans le bras 79 reste toutefois envisageable, même si le support 7 risque alors d'être moins stable.

Selon une variante non-représentée de l'invention, deux demi-bras venant prendre appui sur la platine 3 peuvent jouer le même rôle que le bras 79. En particulier, ces bras peuvent s'appuyer sur le rail central d'indexation 35.

En cours de montage d'un support 5 ou 7, les perçages 5115 et 7115 permettent de faciliter l'engagement des plots 5111 et 7111 dans les encoches 351 en donnant la possibilité de voir les plots et les encoches. Ainsi, ces perçages ont une fonction d'aide visuelle.

Après montage d'un support 5 ou d'un support 7, la position utilisée est visible par lecture du marquage au travers du perçage central 5113 ou 7113, permettant par exemple un enregistrement de la position du support.

Le fait que, dans l'exemple, les rails d'accrochage 331 et le rail d'indexation 35 s'étendent respectivement sur environ 80% et environ 75% de la longueur utile L3 permet de définir 52 positions de montage des supports 5 et 7, entre la face 371 et la nervure 313.

Le montage d'un support 5 ou d'un support 7 sur une position extrême du rail central d'indexation 35, notamment sur les positions 1 et 52, implique que les plots 5111 ou 7111 ne sont pas tous engagés dans les encoches 351. Autrement dit, les plots 5111 ou 7111 situés vers le rail central d'indexation sont engagés dans les encoches 351, alors que les plots situés vers les extrémités de la longueur utile L3 ne sont pas forcément engagés dans les encoches.

Les supports 5 et 7 ne doivent pas être disposés dans des emplacements de fixation privilégiés sur la platine 3. Ainsi, toute combinaison de supports 5 et 7 est installable sur la platine 3 dans la mesure où chaque support dispose d'un espace suffisant pour être installé. Par exemple, la platine 3 peut être équipée uniquement de quatre supports 5, ou uniquement de trois supports 7, ou de trois supports 5 et d'un support 7, dans tout agencement techniquement réalisable.

Les corps principaux 51 et 71 des supports 5 et 7, et plus particulièrement les plaques de base 511 et 711, les parois latérales 513 et 713 et les bandes ou rails de fixation 515 et 715, prennent la forme d'un rail DIN de type Oméga 35 × 7,5 mm répondant au standard EN 50022. Ainsi, ces corps principaux sont compatibles avec les systèmes de fixation couramment utilisés pour l'installation d'appareillages électriques 9.

Comme visible à la figure 4, la majorité des encoches 351 présentent une forme similaire, mais certaines encoches spécifiques sont différentes : des encoches larges 3511 et des encoches longues 3513 sont représentées à la figure 4. Ces encoches spécifiques 3511 et 3513 assurent une fonction technique identique aux encoches 351 pour le montage des supports 5 et 7, mais permettent, en association avec un trou 355, de fixer un support vissé, non-représenté. Ce support vissé est connu dans certaines solutions techniques déjà existantes, et est assemblé par vissage d'une vis dans un trou 355. Une aide visuelle 357 apposée sur le rail central 35 permet d'aider un opérateur à identifier la fonction du trou 355 en phase de montage. Ces encoches spécifiques 3511 et 3513 et ce trou 355 confèrent donc au boîtier de l'invention une plus grande modularité en assurant une compatibilité avec des solutions préexistantes.

Comme les pièces 3, 5 et 7 sont en matériau(x) polymère(s), elles peuvent être facilement recyclées au terme de la durée de vie du boîtier 1.

Dans l'exemple des figures, les corps principaux 51 et 71 sont identiques ou quasi-identiques, ce qui est avantageux en termes d'interaction uniforme avec les pièces 3 et 9. Ceci n'est toutefois pas obligatoire.

En variante non-représentée de l'invention, les supports 5 ou 7 sont équipés d'un nombre de plots 5111 ou 7111 différent de six, par exemple compris entre 1 et 10. Avantageusement, les plots sont disposés par paires sur le support, afin de pouvoir interagir avec les encoches 351 qui sont, de préférence, disposées sur deux rangées comme montré sur les figures. Selon une autre approche, les plots peuvent être disposés sur une seule rangée.

En variante non-représentée de l'invention, le support 7 ne comporte pas de bras élastiquement déformable 79. Selon une autre variante non-représentée de l'invention, le bras déformable 79 est d'une forme différente de la forme représentée sur les figures.

En variante non-représentée de l'invention, les interruptions 333 des rails d'accrochage 331 peuvent ne pas être présentes. En pratique, cela peut être rendu possible par l'utilisation d'une autre méthode de fabrication de la platine 3.

En variante non-représentée de l'invention, le rail central 35 muni d'encoches est une pièce distincte de la platine 3 et est rapporté sur le fond 31 de la platine.

En variante non-représentée de l'invention, les encoches 351 peuvent avoir une forme différente de semi-circulaire, par exemple trapézoïdale.

En variante non-représentée de l'invention, les rails d'accrochage 331 sont des pièces distinctes de la platine 3 et sont rapportés sur les bords latéraux 33 ou sur le fond 31 de la platine.

Selon une autre variante non-représentée, les rails d'accrochage 331 sont ménagés latéralement sur le rail central d'indexation 35. Dans ce cas, un même objet, à savoir le rail 35, constitue à la fois les deux rails d'accrochage 331 et le rail central d'indexation 35. Dans ce cas également, les rails d'accrochage sont découpés localement pour constituer les encoches 351. Dans ce cas également, les supports 5 et 7 sont modifiés de telle sorte que les crochets 55 et 75 sont orientés vers les corps principaux 51 et 71. Le montage et le démontage des supports 5 et 7 par rapport à la platine 3 est alors adapté. En particulier, pour démonter le support 5, il convient d'exercer avec un outil un effort en sens opposé à l'effort F1 à la figure 3, et pour démonter le support 7, il convient d'écarter les organes de manoeuvre 77 du corps principal 71, avec des efforts en sens opposé aux efforts F2 et F3 à la figure 4.

En variante non-représentée de l'invention, le corps principal 51 ou 71 d'un ou plusieurs supports installés prend la forme d'un rail DIN de type différent d'un rail de type Oméga 35 × 7,5 mm, ou prend la forme de tout autre type de structure de fixation d'éléments rapportés.

En variante non-représentée de l'invention, un ou plusieurs autres types de supports que le support 5, le support 7 ou le support vissé sont montés sur la platine 3, ces supports présentant des organes de montage compatibles avec la structure de la platine 3, notamment ses rails 331 et 35.

En variante non-représentée de l'invention, la platine 3 est réalisée dans un polymère différent du polycarbonate, par exemple en polyamide.

En variante non-représentée de l'invention, les supports 5 et 7 sont réalisés dans un polymère différent du polyamide, par exemple en polycarbonate.

L'invention est décrite ci-dessus dans le cas où le boîtier 1 sert au raccordement d'un candélabre à un réseau d'alimentation électrique. Il peut également être utilisée pour le pilotage des feux de signalisation.

Le mode de réalisation et les variantes mentionnées ci-dessus peuvent être combinés entre eux pour générer de nouveaux modes de réalisation de l'invention.

## Revendications

1. Boîtier de protection et de raccordement (1) intégrant une platine (3) équipée de rails (331, 35) et au moins un support (5, 7), rapporté sur cette platine et démontable, **caractérisé en ce que** :
- la platine (3) comporte deux rails d'accrochage (331) disposés de façon longitudinale et un rail central d'indexation (35) comportant des encoches (351) ;
- le support (5, 7) comporte au moins deux crochets d'accrochage (55, 75) et au moins un plot d'indexation (5111, 7111), ces crochets d'accrochage et ce plot d'indexation permettant le montage à la main du support sur la platine par encliquetage des crochets d'accrochage sur les rails d'accrochage et engagement du plot d'indexation dans une des encoches du rail central d'indexation ;
- les rails d'accrochage s'étendent sur au moins 30% de la longueur utile (L3) de la platine ;
- le rail central d'indexation s'étend sur au moins 25% de la longueur utile de la platine ;
et
- les rails d'accrochage et le rail central d'indexation permettent de fixer le support (5, 7) sur la platine (3).

2. Boîtier (1) selon la revendication 1, **caractérisé en ce que** :
- les crochets d'accrochage (55) sont au nombre de deux ;
- le support (5) comprend un corps principal (51) qui porte le plot (5111) et au moins une patte élastiquement déformable (53) reliant le corps principal à un crochet d'accrochage (55) ;
- au moins un crochet d'accrochage, de préférence chaque crochet d'accrochage, comporte une cavité (551) ;
- chaque cavité est configurée pour accueillir un outil permettant de désengager le crochet d'accrochage qui comporte cette cavité du rail latéral (331) associé de la platine (3), par déformation élastique de la patte élastiquement déformable (53) reliant ce crochet d'accrochage (55) au corps principal (51).

3. Boîtier (1) selon la revendication 1 **caractérisé en ce que** :
- les crochets d'accrochage (75) appartiennent à au moins une paire (76) de deux crochets d'accrochage, de préférence deux paires de deux crochets d'accrochage ;
- le support (7) comprend un corps principal (71) qui porte le plot (7111) et au moins une paire de deux pattes élastiquement déformables (73) reliant chacune le corps principal à un des deux crochet d'accrochage (75) d'une paire (76) de deux crochets ; et
- le support comprend des organes de manoeuvre (77) permettant de désengager à la main une paire (76) de crochets d'accrochage des rails d'accrochage (331).

4. Boîtier (1) selon la revendication 3, **caractérisé en ce que** :
- au moins un crochet d'accrochage (75) de chaque paire (76) de crochets, de préférence chaque crochet, comporte un organe de manoeuvre (77) ;
- chaque organe de manoeuvre est configuré pour être manipulé à la main, permettant de désengager le crochet d'accrochage qui comporte cet organe de manoeuvre du rail d'accrochage (351) associé de la platine (3), par déformation élastique de la patte élastiquement déformable (73) reliant ce crochet d'accrochage (75) au corps principal (71).

5. Boîtier (1) selon l'une des revendications 3 ou 4, **caractérisé en ce que** les deux crochets d'accrochage (75) de chaque paire (76) de crochets d'accrochage sont reliés entre deux par un bras élastiquement déformable (79), ce bras présentant de préférence une zone de déformation privilégiée (791).

6. Boîtier (1) selon l'une des revendications précédentes, **caractérisé en ce que** le corps principal (51, 71) du support (5, 7) comprend :
- un perçage central traversant (5113, 7113) permettant de visualiser un marquage (353) présent sur le rail central (35) de la platine (3) en configuration montée ou en cours de montage du premier ou du deuxième support sur la platine ; et
- deux perçages latéraux traversant (5115, 7115) disposés en regard de deux plots d'indexation (5111, 7111) et permettant de visualiser ces plots et des encoches (351) du rail central de la platine en configuration montée ou en cours de montage du premier ou du deuxième support sur la platine.

7. Boîtier (1) selon l'une des revendications précédentes, **caractérisé en ce que** la platine (3) est en matériau polymère, de préférence en polycarbonate, et **en ce que** le ou chaque support (5, 7) est en matériau polymère, de préférence en polyamide.

8. Boîtier (1) selon l'une des revendications précédentes, **caractérisé en ce que** la platine (3) comporte un ou plusieurs trous de fixation (355) et une ou plusieurs encoches spécifiques (3511, 3513) configurés pour permettre la fixation d'un support vissé.

9. Boîtier (1) selon l'une des revendications précédentes, **caractérisé en ce que** les encoches (351) du rail central d'indexation (35) de la platine (3) sont réparties sur deux rangées parallèles à un axe longitudinal (X) de la platine et **en ce que** le support (5, 7) comprend au moins une paire de plots d'indexation (5111, 7111), de préférence trois paires de plots d'indexation, les plots d'une paire de plots étant configurés pour s'engager dans deux encoches appartenant chacune à une rangée d'encoches.

10. Méthode d'assemblage et de désassemblage du boîtier de protection et de raccordement (1) selon l'une des revendications précédentes, **caractérisé en ce que** :
- le support (5, 7) est monté à la main sur la platine (3) par encliquetage des crochets d'accrochage (55, 75) dans des rails d'accrochage (331) et par engagement des plots d'indexation (5111, 7111) dans des encoches (351) du rail central (35) ;
- un support (5) d'un premier type est démonté de la platine en insérant un outil dans une cavité (551) d'un crochet d'accrochage (55) puis en exerçant à l'aide de l'outil un effort (F1) sur le crochet d'accrochage permettant de désengager ce crochet d'un rail d'accrochage par déformation d'une patte élastiquement déformable (53) ; et/ou
- un support (7) d'un deuxième type est démonté de la platine à la main en exerçant deux efforts (F2, F3) sur une paire d'organes de manoeuvre (77) permettant de désengager une paire de crochets d'accrochage de deux rails d'accrochage par déformation d'une paire de pattes élastiquement déformables (73) et éventuellement d'un bras élastiquement déformable (79).

## Patentansprüche

1. Schutz- und Anschlussgehäuse (1), das eine mit Schienen (331, 35) ausgestattete Platine (3) und mindestens einen Halterung (5, 7) integriert, der auf diese Platine aufgesetzt und demontierbar ist, **dadurch gekennzeichnet, dass**:
- die Platine (3) zwei in Längsrichtung angeordnete Einhängeschienen (331) und eine mittlere Indexierungsschiene (35) umfassend Aussparungen (351) umfasst;
- die Halterung (5, 7) mindestens zwei Einhängehaken (55, 75) und mindestens einen Indexierungsklotz (5111, 7111) aufweist, wobei diese Einhängehaken und dieser Indexierungsklotz die Montage von Hand der Halterung auf der Platine durch Einrasten der Einhängehaken in die Einhängeschienen und Einsetzen des Indexierungsklotzes in eine der Kerben der mittleren Indexierungsschiene ermöglichen;
- sich die Einhängeschienen über mindestens 30 % der Nutzlänge (L3) der Platine erstrecken;
- sich die mittlere Indexierungsschiene über mindestens 25 % der Nutzlänge der Platine erstreckt; und
- die Einhängeschienen und die mittlere Indexierungsschiene es ermöglichen, die Halterung (5, 7) an der Platine (3) zu befestigen.

2. Gehäuse (1) nach Anspruch 1, **dadurch gekennzeichnet, dass**: die Anzahl der Einhängehaken (55) zwei ist;
- die Halterung (5) einen Hauptkörper (51), der den Klotz (5111) trägt, und mindestens eine elastisch verformbare Lasche (53) umfasst, die den Hauptkörper mit einem Einhängehaken (55) verbindet;
- mindestens ein Einhängehaken, vorzugsweise jeder Einhängehaken, einen Hohlraum (551) umfasst;
- jeder Hohlraum konfiguriert ist, um ein Werkzeug aufzunehmen, das es ermöglicht, den Einhängehaken, der diesen Hohlraum aufweist, durch elastisches Verformen der elastisch verformbaren Lasche (53), die diesen Einhängehaken (55) mit dem Hauptkörper (51) verbindet, von der zugehörigen Seitenschiene (331) der Platine (3) zu lösen.

3. Gehäuse (1) nach Anspruch 1, **dadurch gekennzeichnet, dass**:
- die Einhängehaken (75) zu mindestens einem Paar (76) von zwei Einhängehaken gehören, vorzugsweise zu zwei Paaren von zwei Einhängehaken;
- die Halterung (7) einen Hauptkörper (71), der den Klotz (7111) trägt, und mindestens ein Paar von zwei elastisch verformbaren Laschen (73) umfasst, die jeweils den Hauptkörper mit einem von zwei Einhängehaken (75) eines Paars (76) von zwei Haken verbinden; und
- die Halterung Betätigungselemente (77) umfasst, die es ermöglichen, ein Paar (76) Einhängehaken von Hand aus den Einhängeschienen (331) zu lösen.

4. Gehäuse (1) nach Anspruch 3, **dadurch gekennzeichnet, dass**:
- mindestens ein Einhängehaken (75) jedes Hakenpaars (76), vorzugsweise jeder Haken, ein Betätigungselement (77) umfasst;
- jedes Betätigungselement konfiguriert ist, um von Hand gehandhabt zu werden, wodurch der Einhängehaken, der dieses Betätigungselement umfasst, durch elastisches Verformen der elastisch verformbaren Lasche (73), die diesen Einhängehaken (75) mit dem Hauptkörper (71) verbindet, von der zugehörigen Einhängeschiene (351) der Platine (3) gelöst werden kann.

5. Gehäuse (1) nach einem der Ansprüche 3 oder 4, **dadurch gekennzeichnet, dass** die zwei Einhängehaken (75) von jedem Paar (76) von Einhängehaken durch einen elastisch verformbaren Arm (79) miteinander verbunden sind, wobei dieser Arm vorzugsweise einen bevorzugten Verformungsbereich (791) aufweist.

6. Gehäuse (1) nach einem der vorherigen Ansprüche, **dadurch gekennzeichnet, dass** der Hauptkörper (51, 71) der Halterung (5, 7) Folgendes umfasst:
- eine mittlere Durchgangsbohrung (5113, 7113), die es ermöglicht, eine Markierung (353) zu sehen, die auf der mittleren Schiene (35) der Platine (3) in der montierten Konfiguration oder während der Montage der ersten oder zweiten Halterung auf der Platine vorhanden ist; und
- zwei seitliche Durchgangsbohrungen (5115, 7115), die gegenüber von zwei Indexierungsklötzen (5111, 7111) angeordnet sind und es ermöglichen, diese Klötze und Kerben (351) der mittleren Schiene der Platine in montierter Konfiguration oder während der Montage der ersten oder zweiten Halterung auf der Platine sichtbar zu machen.

7. Gehäuse (1) nach einem der vorherigen Ansprüche, **dadurch gekennzeichnet, dass** die Platine (3) aus einem Polymermaterial, vorzugsweise aus Polycarbonat, ist und dass der oder jede Halterung (5, 7) aus einem Polymermaterial, vorzugsweise aus Polyamid, ist.

8. Gehäuse (1) nach einem der vorherigen Ansprüche, **dadurch gekennzeichnet, dass** die Platine (3) ein oder mehrere Befestigungslöcher (355) und eine oder mehrere spezifische Aussparungen (3511, 3513) umfasst, die konfiguriert sind, um die Befestigung einer geschraubten Halterung zu ermöglichen.

9. Gehäuse (1) nach einem der vorherigen Ansprüche, **dadurch gekennzeichnet, dass** die Kerben (351) der mittleren Indexierungsschiene (35) der Platine (3) auf zwei Reihen parallel zu einer Längsachse (X) der Platine verteilt sind und dass die Halterung (5, 7) mindestens ein Paar von Indexierungsklötzen (5111, 7111), vorzugsweise drei Paare von Indexierungsklötzen, umfasst, wobei die Klötze eines Paars von Klötzen konfiguriert sind, um in zwei Kerben einzugreifen, die jeweils zu einer Reihe von Kerben gehören.

10. Verfahren zum Zusammenbau und Auseinandernehmen des Schutz-und Anschlussgehäuses (1) nach einem der vorherigen Ansprüche, **dadurch gekennzeichnet, dass**:
- die Halterung (5, 7) von Hand auf der Platine (3) montiert wird, indem die Einhängehaken (55, 75) in die Einhängeschienen (331) einrasten und die Indexierungsklötze (5111, 7111) in die Aussparungen (351) der mittleren Schiene (35) eingreifen;
- eine Halterung (5) eines ersten Typs von der Platine demontiert wird, indem ein Werkzeug in einen Hohlraum (551) eines Einhängehakens (55) eingeführt wird und dann mittels des Werkzeugs eine Kraft (F1) auf den Einhängehaken ausgeübt wird, die es ermöglicht, diesen Haken durch Verformen einer elastisch verformbaren Lasche (53) aus einer Einhängeschiene zu lösen; und/oder eine Halterung (7) eines zweiten Typs von Hand von der Platine demontiert wird, indem zwei Kräfte (F2, F3) auf ein Paar von Betätigungselementen (77) ausgeübt werden, die es ermöglichen, durch Verformen eines Paars von elastisch verformbaren Laschen (73) und eventuell eines elastisch verformbaren Arms (79) ein Paar von Einhängehaken von zwei Einhängeschienen zu lösen.

## Claims

1. Protective and connection housing (1) comprising a plate (3) equipped with rails (331, 35) and at least one support (5, 7) which is attached to this plate and can be removed, **characterised in that**:
- the plate (3) has two longitudinally arranged hooking rails (331) and a central indexing rail (35) with notches (351);
- the support (5, 7) comprises at least two hooks (55, 75) and at least one indexing pin (5111, 7111), these hooks and this indexing pin allowing the support to be mounted by hand on the plate by snapping the hooks onto the hooking rails and engaging the indexing pin in one of the notches of the central indexing rail;
- the hanging rails extend over at least 30% of the useful length (L3) of the plate;
- the central indexing rail extends over at least 25% of the effective length of the plate;
and
- the hanging rails and the central indexing rail are used to fix the support (5, 7) to the plate (3).

2. The housing (1) according to claim 1, **characterised in that**: the hooks (55) are two in number;
- the holder (5) comprises a main body (51) which carries the stud (5111) and at least one elastically deformable tab (53) connecting the main body to a hook (55);
- at least one hook, preferably each hook, has a cavity (551);
- each cavity is configured to accommodate a tool for disengaging the hook which comprises this cavity from the associated side rail (331) of the plate (3), by resilient deformation of the elastically deformable tab (53) connecting this hook (55) to the main body (51).

3. Housing (1) according to claim 1, **characterised in that**:
- the hooks (75) belong to at least one pair (76) of two hooks, preferably two pairs of two hooks;
- the support (7) comprises a main body (71) which carries the stud (7111) and at least one pair of two elastically deformable legs (73) each connecting the main body to one of two hooks (75) of a pair (76) of two hooks; and
- the support comprises operating members (77) for manually disengaging a pair (76) of hooks from the hooking rails (331).

4. Housing (1) according to claim 3, **characterised in that**:
- at least one hook (75) of each pair (76) of hooks, preferably each hook, has an operating member (77);
- each operating member is configured to be manipulated by hand, allowing the hook which includes this operating member to be disengaged from the associated hooking rail (351) of the plate (3), by resilient deformation of the elastically deformable tab (73) connecting this hooking hook (75) to the main body (71).

5. Housing (1) according to one of claims 3 or 4, **characterised in that** the two hooks (75) of each pair (76) of hooks are connected to each other by an elastically deformable arm (79), this arm preferably having a preferred deformation zone (791).

6. Housing (1) according to one of the preceding claims, **characterised in that** the main body (51, 71) of the support (5, 7) comprises:
- a central through-hole (5113, 7113) for viewing a marking (353) on the central rail (35) of the plate (3) in the mounted configuration or during mounting of the first or second support on the plate; and
- two lateral through holes (5115, 7115) arranged opposite two indexing studs (5111, 7111) and allowing these studs and notches (351) of the central rail of the plate to be seen in the mounted configuration or during the mounting of the first or second support on the plate.

7. Housing (1) according to any of the preceding claims, **characterised in that** the plate (3) is of polymeric material, preferably polycarbonate, and **in that** the or each support (5, 7) is of polymeric material, preferably polyamide.

8. Housing (1) according to one of the preceding claims, **characterised in that** the plate (3) comprises one or more fixing holes (355) and one or more specific notches (3511, 3513) configured to allow the fixing of a screwed support.

9. Housing (1) according to one of the preceding claims, **characterised in that** the notches (351) of the central indexing rail (35) of the plate (3) are distributed over two rows parallel to a longitudinal axis (X) of the plate and **in that** the support (5, 7) comprises at least one pair of indexing pins (5111, 7111), preferably three pairs of indexing pins, the pins of a pair of pins being configured to engage in two notches each belonging to a row of notches.

10. A method of assembling and disassembling the protective and connecting housing (1) according to any of the preceding claims, **characterised in that**:
- the support (5, 7) is mounted by hand on the plate (3) by latching the hooks (55, 75) into hooking rails (331) and by engaging the indexing studs (5111, 7111) into notches (351) of the central rail (35);
- a support (5) of a first type is dismantled from the plate by inserting a tool into a cavity (551) of a hook (55), then by exerting a force (F1) on the hook with the aid of the tool, enabling this hook to be disengaged from a hooking rail by deformation of an elastically deformable lug (53); and/or
- a support (7) of a second type is dismantled from the plate by hand by exerting two forces (F2, F3) on a pair of manoeuvring members (77) enabling a pair of hooks to be disengaged from two hooking rails by deformation of a pair of elastically deformable lugs (73) and possibly of an elastically deformable arm (79).
